# EUROPÄISCHE PATENTANMELDUNG

(11) **EP 2 227 961 A1**
(43) Veröffentlichungstag der Anmeldung: **15.09.2010**
(21) Anmeldenummer: 10155960.7
(22) Anmeldetag: 09.03.2010
(51) Int. Cl.: A21B 1/48, A21B 3/04

(54) **Verfahren und Vorrichtung zum Entschwaden von Tunnelbacköfen**

(30) Priorität: 10.03.2009 DE 102009001436
(71) Anmelder: MIWE Michael Wenz GmbH, 97450 Arnstein (DE)
(72) Erfinder: Späth, Hermann, 94333, Geiselhöring (DE)

(57) **Zusammenfassung**

Die Erfindung betrifft ein Verfahren zum Entschwaden von Tunnelöfen, bei dem ein Lebensmittel einen tunnelartigen Backraum (4) durchläuft, der Backraum (4) erhitzt wird und dem Backraum (4) Wasserdampf zugeführt wird, wobei der Wasserdampf nach Ablauf einer vorbestimmten Zeit wieder aus dem Backraum (4) entfernt wird.

Aufgabe der vorliegenden Erfindung ist es, eine klar definierte und vollständige Beendigung der Schwadeneinwirkung zu ermöglichen.

Diese Aufgabe wird erfindungsgemäß dadurch gelöst, dass einer Entschwadungszone des Backraums bei dem Entfernen des Wasserdampfes in dem Moment der Entschwadung Kaltluft mit einem erhöhten Druck zugeführt wird, indem eine Schwadenaustrittsöffnung geöffnet wird, während die Kaltluft eingeblasen wird, und so die von dem überhitzten Sattdampf gebildete Atmosphäre durch Kaltluft ersetzt wird.

## Beschreibung

### Beschreibung

### Technisches Gebiet

Die Erfindung betrifft ein Verfahren zum Entschwaden eines Tunnelofens, bei dem das Lebensmittel einen tunnelartigen Backraum durchläuft, der Backraum erhitzt wird und dem Backraum Wasserdampf zugeführt wird, wobei der Wasserdampf nach Ablauf einer vorbestimmten Zeit wieder aus dem Backraum entfernt wird. Die Erfindung betrifft ferner einen zur Durchführung dieses Verfahrens geeigneten Tunnelbackofen.

Üblicherweise werden Teiglinge in derartigen Tunnelöfen zu Backwaren verarbeitet.

### Stand der Technik

Tunnelbacköfen mit Bedampfungsvorrichtungen, auch Beschwadungsvorrichtungen genannt, sind beispielsweise bekannt aus der Druckschrift DE 21 02 692. Hier wird vorgeschlagen, den spezifischen Dampfgehalt des Backschwadens mittels kalter, feuchtigkeitsgesättigter Luft zu beeinflussen. Die Mischung von Backschwaden und Luft soll innerhalb der Dampfzone oder außerhalb in den Zuleitungen erfolgen. In dieser Druckschrift werden weitere Verfahren und Vorrichtungen beschrieben, welche den Dampfzustand des Backschwadens beeinflussen sollen. Diese beruhen darauf, den überhitzten Dampf mit Wasser zu kühlen, sei es durch Einleiten des Schwadens in ein Wasserbad oder durch Einspritzen von fein zerstäubtem Wasser in den Schwaden mittels Düsen. Die Dampfzone ist am Eingang durch eine in der Höhe einstellbare Tür und am Ausgang durch einen verstellbaren Teflonvorhang in sich abgeschlossen. Schwadenabzüge regulieren die Dauer und Intensität der Schwadeneinwirkung.

### Offenbarung der Erfindung

Aufgabe der vorliegenden Erfindung ist es, eine klar definierte und vollständige Beendigung der Schwadeneinwirkung zu ermöglichen.

Diese Aufgabe wird erfindungsgemäß dadurch gelöst, dass einer Entschwadungszone des Backraums bei dem Entfernen des Wasserdampfes in dem Moment der Entschwadung Kaltluft mit einem erhöhten Druck zugeführt wird, indem eine Schwadenaustrittsöffnung geöffnet wird, während die Kaltluft eingeblasen wird, und so die von dem überhitzten Sattdampf gebildete Atmosphäre durch Kaltluft ersetzt wird.

Mit anderen Worten wird in dem Moment der Entschwadung dem tunnelartigen Backraum kalte Luft zugeführt. Da bei niedriger Temperatur der Partialdruck des Wassers niedrig ist, weist kalte Luft grundsätzlich einen niedrigeren absoluten Wassergehalt auf als heiße Luft und insbesondere als überhitzter Sattdampf. In der Praxis wird während des Einblasens der Kaltluft eine Schwadenaustrittsöffnung geöffnet, durch welche der Wasserdampf aus dem Backraum absaugt wird. Beim Entschwaden wird also die von dem überhitzten Sattdampf gebildete Atmosphäre in dem tunnelförmigen Backraum durch Kaltluft ersetzt. Diese Kaltluft wird durch die heißen Wandungen des Backraums und durch die heißen Backwarenoberflächen erwärmt, wobei ihre Temerpatur und folglich ihre Wasseraufnahmefähigkeit steigt. Das Einblasen der Kaltluft unter Druck bewirkt folglich nicht nur das rasche Austreiben des Wasserdampfes aus dem Backraum. In der sich erwärmenden Kaltluft kann auf der Oberfläche der Backware niedergeschlagenes Wasser schnell und vollständig verdunsten. Hierdurch wird das Backergebnis bei einer großen Anzahl von Backware erheblich verbessert.

Das Einblasen von Kaltluft zum Austreiben des Wasserdampfes aus einem Tunnelbackofen bewirkt einen ähnlichen Effekt wie das Ausziehen eines Backwagens aus einem beschwadeten Wagenofen in die Atmosphäre der Backstube zum Unterbrechen des Beschwadungsvorgangs. Im Gegensatz zum einfachen Abzug des Dampfschwadens über Schwadenabzüge oder durch geöffnete Entschwadungsklappen bewirkt das erfindungsgemäße Verfahren eine vollständige und schlagartige Entfernung des Backschwadens sowie eine schlagartige Reduktion der Temperatur der die Backwaren umgebenden Luft. Es hat sich gezeigt, dass eine derartige schnelle und vollständige Beendung der Beschwadung bei bestimmten Backwaren vorteilhaft sein kann. Insbesondere bei Roggenbroten und Weizenkleingebäcken können Krustenrisse durch den vollständigen Abbruch der Beschwadung mittels Kaltluft vermieden werden, die bei einer allmählichen Entschwadung über einen Schwadenabzug auftreten können. Weizenbrote und Weizenkleingebäcke weisen bei der Kaltluftentschwadung einen verbesserten Glanz und Ausbund auf.

In der Praxis kann die Kaltluft über ein Gebläse in den Backraum eingeblasen werden. Alternativ kann die Kaltluft aus einer Druckluftquelle entnommen und in den Backraum eingeblasen werden. Durch Kompressoren bereitgestellte und ggf. in Flaschen eingefüllte Druckluft kann dem Backraum zugeführt werden. Hierbei ist allerdings zu berücksichtigen, dass die Reinheit der eingeblasenen Druckluft den hohen Anforderungen für die Lebensmittelverarbeitung entsprechen muss.

In der Praxis werden die Backwaren auf eine Transportvorrichtung, üblicherweise ein Transportband, aufgelegt, welche den tunnelartigen Backraum durchläuft und die Backwaren dabei durch den Backraum transportiert. Die Backware kann durch einen Abschnitt des tunnelartigen Backraums transportiert werden, in den die Kaltluft zugeführt wird, wobei dieser Abschnitt zumindest auf einer Seite durch einen Trennvorhang begrenzt ist. In der Praxis befindet sich der Schwadenapparat, welcher den Dampfschwaden auf die Backwaren aufbringt, vor dem Abschnitt der erfindungsgemäßen Kaltentschwadung. Der Schwadenapparat sollte von dem Abschnitt der erfindungsgemäßen Kaltentschwadung durch einen Vorhang, z.B. aus Teflon, getrennt sein, damit die Atmosphäre im Bereich des Schwadenapparats durch die eingeblasene Kaltluft nicht nachträglich verändert wird. Auch hinter der erfindungsgemäßen Entschwadungszone kann ein Vorhang angeordnet werden, der eine Temperaturabsenkung des Backraums durch die Kaltlufteinblasung reduziert oder vermeidet.

Die Kaltluft kann dem Backraum im oberen Bereich zugeführt werden, wobei die Austrittsöffnungen für den Wasserdampf im unteren Bereich des Backraums liegen können. In diesem Fall wird der Backraum in der Entschwadungszone im Gleichstrom durchspült. Es ist aber auch möglich, dass die Entschwadungsöffnung ebenfalls oben liegt. Die kalte Druckluft erzeugt dann eine U-förmige Durchströmung der Entschwadungszone des Backraums. Ferner kann die Kaltluft auch von unten einströmen, wenn das Transportband, auf dem die Backwaren aufliegen, luftdurchlässig ist.

Ein Tunnelbackofen, der zur Durchführung des erfindungsgemäßen Verfahrens geeignet ist, umfasst folgende Merkmale:
- einen tunnelartigen Backraum zum Hindurchführen von Lebensmitteln,
- eine Heizvorrichtung zum Erhitzen des Backraums,
- eine Beschwadungszone mit einer Vorrichtung zur Zufuhr von Wasserdampf in den Backraum,
- eine Entschwadungszone mit einer Vorrichtung zum Entfernen des Wasserdampfes aus dem Backraum.

Gemäß der Erfindung sind in der Entschwadungszone des Backraums eine Vorrichtung für die Zufuhr von Kaltluft und mindestens eine Schwadenaustrittsöffnung, die zum Entfernen des Wasserdampfes geöffnet werden kann, angeordnet.

Wie weiter oben erwähnt, ermöglicht die Kaltluftzufuhrvorrichtung das schlagartige Entfernen des Backschwadens aus dem Backraum, wobei kalte Luft mit einem geringen absoluten Feuchtigkeitsgehalt den Backschwaden ersetzt und bei ihrer Erwärmung überschüssige Feuchtigkeit von der Oberfläche der Backwaren aufnehmen kann.

In der Praxis kann der Entschwadungszone ein Gebläse zum Einblasen der Kaltluft in den Backraum zugeordnet sein. Alternativ kann eine Druckluftquelle vorgesehen sein, welche ein Einblasen von Kaltluft in den Backraum ermöglicht. Ein Kompressor kann als Druckluftquelle dienen. Ferner kann die Druckluft in einer Druckluftflasche aufgenommen sein und von dort aus zum Backraum strömen.

Die Entschwadungszone kann ferner eine Schwadenaustrittsöffnung umfassen, die zum Entfernen des Wasserdampfes aus dem Backraum geöffnet werden kann.

Eine Eintrittsöffnung, durch die die kalte Luft in die Entschwadungszone geleitet wird, kann im oberen Bereich des Backraums angeordnet sein, wobei mindestens eine Schwadenaustrittsöffnung vorzugsweise im unteren Bereich des Backraums angeordnet ist. Hierdurch wird der Backraum von oben nach unten durch die kalte Druckluft durchspült.

Der Tunnelofen kann in der Praxis mit einer Transportvorrichtung für die zu backenden Lebensmittel (Backwaren) versehen sein, welche den tunnelartigen Backraum durchläuft. Die Transportvorrichtung kann ein Transportband sein. Die Transportvorrichtung kann luftdurchlässig sein, damit die kalte Luft durch die Transportvorrichtung hindurch in den Backraum eintreten und/oder aus dem Backraum austreten kann. Die Entschwadungszone kann zumindest an einer Seite durch einen Trennvorhang von den benachbarten Abschnitten des Backraums abgetrennt sein. Der Trennvorhang vermindert den Gasaustausch mit den benachbarten Backraumabschnitten und dadurch die Abkühlung der benachbarten Backraumabschnitte durch die in die Entschwadungszone eingeblasene Kaltluft.

### Kurze Zeichnungsbeschreibung

Ausführungsformen der Erfindung werden nachfolgend unter Bezugnahme auf die beigefügten Zeichnungen beschrieben.

Fig. 1 zeigt eine schematische geschnittene Seitenansicht eines erfindungsgemäßen Tunnelbackofens.

Fig. 2 zeigt eine schematische Draufsicht auf den Tunnelbackofen der Fig. 1.

Fig. 3 zeigt eine der Fig. 1 entsprechende Ansicht einer weiteren Ausführungsform des erfindungsgemäßen Tunnelbackofens.

### Ausführungsformen der Erfindung

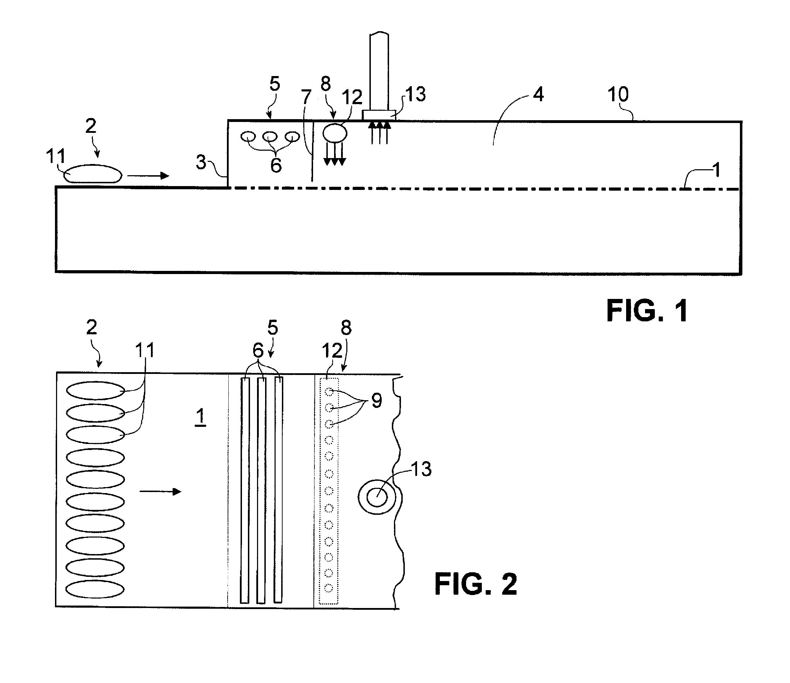

Der Tunnelofen aus Fig. 1 weist ein Transportband 1 auf, welches als Netzband oder Scharnierplattenband ausgebildet ist. Dieses Transportband 1 durchläuft einen Backraum 4 in der durch den Pfeil dargestellten Transportrichtung. Der Backraum 4 wird durch ein isolierendes Ofengehäuse 10 von der Umgebung abgetrennt. Im Auflageabschnitt 2 werden Teiglinge 11 zur Bildung von Backwaren auf das Transportband 1 aufgelegt.

Die Teiglinge 11 durchlaufen einen ersten Vorhang 3, der den Backraum 4 von der Umgebung abtrennt. Der erste Abschnitt des Backraums 4 bildet eine Beschwadungszone 5 und weist einen Schwadenapparat 6 auf. Der Schwadenapparat weist mehrere Dampfaustritte für Dampf auf, der in einem separaten Dampferzeuger produziert wurde. Es ist auch möglich, den Dampf mit Eigendampfapparaten in dem Ofen selbst zu erzeugen. Am Ende der Beschwadungszone 5 ist ein zweiter Vorhang 7 angeordnet. Dieser zweite Vorhang 7 trennt die Beschwadungszone 5 von der Entschwadungszone 8.

In der Entschwadungszone 8 ist ein Zufuhrkanal 12 mit einer Anzahl von Lufteintrittsöffnungen 9 für kalte Druckluft vorgesehen. Der Zufuhrkanal 12 mit den Lufteintrittsöffnungen 9 befindet sich an der oberen Deckwand des Backraums 4. In Transportrichtung hinter dem Zufuhrkanal 12 ist ein Backschwadenabzug 13 vorgesehen, aus dem der heiße Dampfschwaden austreten kann. Der Backschwadenabzug 13 weist eine zum Backraum 4 hin offene Austrittsöffnung auf, an der ein Unterdruck zum Absaugen des Backschwadens angelegt werden kann.

Die Austrittsöffnung des Backschwadenabzugs 13 ist in dieser Ausführungsform in der Decke des Backraums 4 angeordnet. Sie ist vorzugsweise verschließbar, um das Absaugen der erhitzten Backatmosphäre bei Bedarf zu unterbrechen.

In der Ausführungsform der Fig. 1 und 2 ist der Backschwadenabzug ebenfalls an der Deckwand des Backraums 4 angeordnet.

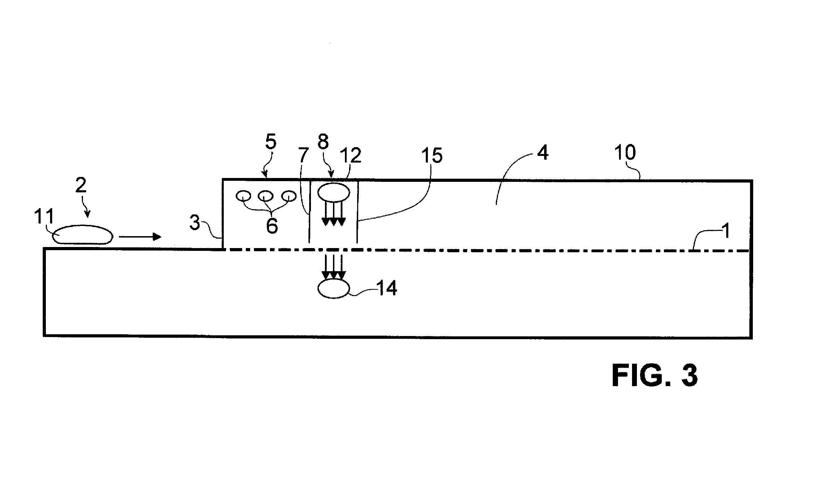

Alternativ kann der Abzug für den Backschwaden unterhalb des Transportbandes 1 angeordnet werden. Diese Ausführungsform ist in Fig. 3 dargestellt. Unterhalb des Transportbandes 1 ist ein Austrittskanal 14 montiert, der auf der zum Transportband 1 weisenden Seite Austrittsöffnungen aufweist, durch die der Backschwaden aus dem Backraum 4 abgesaugt werden kann. Das Transportband 1 ist dabei luftdurchlässig auszubilden. In diesem Fall kann der Backraum in der Entschwadungszone 8 von oben nach unten im Gleichstrom mit Kaltluft durchspült werden. Bei Verwendung eines Gebläses (nicht dargestellt) zur Erzeugung der kalten Druckluft kann die Saugseite des Gebläses mit dem Austrittskanal 14 für den Backschwaden verbunden sein.

Zusätzlich ist es möglich, hinter der Entschwadungszone 8 einen weiteren Vorhang 15 vorzusehen. Hierdurch wird die Menge der in den nachfolgenden Backraum eintretenden Luft reduziert. Dies ist aber nicht unbedingt erforderlich. Es kann sich positiv auf das Backergebnis auswirken, wenn die eingeblasene Kaltluft mit den Backwaren den Backraum 4 durchläuft und dabei kontinuierlich erhitzt wird, so dass sie Feuchtigkeit von der Oberfläche der Backwaren aufnehmen kann.

### Bezugszeichenliste

- 1: Transportband
- 2: Auflageabschnitt
- 3: erster Vorhang
- 4: Backraum
- 5: Beschwadungszone
- 6: Schwadenapparat
- 7: zweiter Vorhang
- 8: Entschwadungsapparat
- 9: Lufteintrittsöffnungen
- 10: Ofengehäuse
- 11: Teigling, Lebensmittel
- 12: Zufuhrkanal
- 13: Backschwadenabzug
- 14: Austrittskanal
- 15: dritter Vorhang

## Patentansprüche

1. Verfahren zum Entschwaden von Tunnelöfen, bei dem ein Lebensmittel einen tunnelartigen Backraum (4) durchläuft, der Backraum (4) erhitzt wird und dem Backraum (4) Wasserdampf zugeführt wird, wobei der Wasserdampf nach Ablauf einer vorbestimmten Zeit wieder aus dem Backraum (4) entfernt wird,
**dadurch gekennzeichnet, dass** einer Entschwadungszone des Backraums (4) bei dem Entfernen des Wasserdampfes in dem Moment der Entschwadung Kaltluft mit einem erhöhten Druck zugeführt wird, wobei eine Schwadenaustrittsöffnung geöffnet wird, während die Kaltluft eingeblasen wird, und so die von dem überhitzten Sattdampf gebildete Atmosphäre durch Kaltluft ersetzt wird.

2. Verfahren nach Anspruch 1, **dadurch gekennzeichnet, dass** die Kaltluft über ein Gebläse in den Backraum (4) eingeblasen wird.

3. Verfahren nach Anspruch 1 oder 2, **dadurch gekennzeichnet, dass** die Kaltluft aus einer Druckluftquelle in den Backraum (4) eingeblasen wird.

4. Verfahren nach einem der vorangehenden Ansprüche, **dadurch gekennzeichnet, dass** das Lebensmittel auf eine Transportvorrichtung (1) aufgelegt wird, welche es durch den tunnelartigen Backraum (4) hindurch transportiert.

5. Verfahren nach Anspruch 4, **dadurch gekennzeichnet, dass** das Lebensmittel durch einen Abschnitt des tunnelartigen Backraums transportiert wird, in den die Kaltluft zugeführt wird, wobei vor und/oder nach dem Abschnitt ein Vorhang (3,7) durchlaufen wird.

6. Verfahren nach einem der vorangehenden Ansprüche, **dadurch gekennzeichnet, dass** die Kaltluft dem Backraum (4) im oberen Bereich zugeführt wird und dass der Wasserdampf im unteren und oder im oberen Bereich aus dem Backraum (4) austritt.

7. Tunnelbackofen, bei dem das Lebensmittel einen tunnelartigen Backraum durchläuft, der Backraum (4) erhitzt wird und Wasserdampf dem Backraum (4) zugeführt und wieder aus dem Backraum entfernt wird,
**dadurch gekennzeichnet, dass** in einer Entschwadungszone des Backraums (4) eine Vorrichtung (12) für die Zufuhr von Kaltluft und mindestens eine Schwadenaustrittsöffnung, die zum Entfernen des Wasserdampfes geöffnet werden kann, angeordnet sind.

8. Vorrichtung nach Anspruch 7, **gekennzeichnet durch** ein dem Backraum (4) zugeordnetes Gebläse zum Einblasen der Kaltluft in den Backraum (4).

9. Vorrichtung nach Anspruch 7 oder 8, **gekennzeichnet durch** eine dem Backraum (4) zugeordnete Druckluftquelle zum Einblasen der Kaltluft in den Backraum (4).

10. Vorrichtung nach einem der Ansprüche 7 bis 9, **dadurch gekennzeichnet, dass** mindestens eine Eintrittsöffnung (9) für die kalte Luft im oberen Bereich des Backraums (4) angeordnet ist und dass mindestens eine Schwadenaustrittsöffnung im unteren Bereich des Backraums (4) angeordnet ist.

11. Vorrichtung nach einem der Ansprüche 7 bis 10, **gekennzeichnet durch** eine Transportvorrichtung (1) für das Lebensmittel, welche den tunnelartigen Backraum (4) durchläuft.

12. Vorrichtung nach Anspruch 11, **dadurch gekennzeichnet, dass** die Vorrichtung für die Zufuhr von Kaltluft einer Entschwadungszone (8) des tunnelartigen Backraums (4) zugeordnet ist, und dass vor und/oder hinter der Entschwadungszone (8) ein Trennvorhang (15) angeordnet ist, der den Gasaustausch zwischen der Entschwadungszone (8) und einem benachbarten Abschnitt reduziert oder vermeidet.
